Europäisches Patentamt

European Patent Office

Office européen des brevets

(11) Publication number: **0 241 199**
**A2**

# (12) EUROPEAN PATENT APPLICATION

(21) Application number: **87302759.3**

(22) Date of filing: **31.03.87**

(51) Int. Cl.4: **C01B 35/10** , //B01J29/04

(30) Priority: **11.04.86 US 850651**

(43) Date of publication of application:
**14.10.87 Bulletin 87/42**

(84) Designated Contracting States:
**AT BE DE FR GB IT NL SE**

(71) Applicant: **MOBIL OIL CORPORATION**
**150 East 42nd Street**
**New York New York 10017(US)**

(72) Inventor: **Shihabi, David Said**
**8 Moores Mill Mt. Rose Road**
**Pennington New Jersey 08534(US)**
Inventor: **Chang, Clarence Dayton**
**11 Murray Place**
**Princeton New Jersey 08540(US)**
Inventor: **Han, Scott**
**4 Valerie Lane**
**Lawrenceville New Jersey 08644(US)**

(74) Representative: **Cooper, John Anthony et al**
**Mobil Court 3 Clements Inn**
**London WC2A 2EB(GB)**

(54) **Boron substitution into the framework of crystalline silicates.**

(57) A process for incorporating boron into the framework of a crystalline silicate or aluminosilicate comprises the step of contacting the crystalline silicate or aluminosilicate with a source of fluoride ion, in the presence of water and a source of boron under conditions of pH and temperature to retain the crystal structure of the silicate or aluminosilicate and incorporate boron therein.

EP 0 241 199 A2

## BORON SUBSTITUTION INTO THE FRAMEWORK OF CRYSTALLINE SILICATES

The present invention relates to a method of incorporating boron into the framework of a crystalline silicate or aluminosilicate.

Zeolitic materials, both natural and synthetic, have been demonstrated in the past to have catalytic properties for various types of hydrocarbon conversion. Certain zeolitic materials are ordered, porous crystalline aluminosilicates having a definite crystalline structure as determined by X-ray diffraction within which there are a number of smaller cavities which may be interconnected by a number of still smaller channels or pores. These cavities and pores are uniform in size within a specific zeolitic material. Since the dimensions of these pores are such as to accept for absorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as a rigid three-dimensional framework of $SiO_4$ and $AlO_4$ in which the tetrahedra are cross-linked by the sharing of oxygen atoms whereby the ratio of the total aluminum and silicon atoms to oxygen atoms is 1:2. The electrovalence of the tetrahedra containing aluminum is balanced by the inclusion in the crystal of a cation, for example an alkali metal or an alkaline earth metal cation. This can be expressed wherein the ratio of aluminum to the number of various cations, such as Ca/2, Sr/2, Na, K or Li, is equal to unity. One type of cation may be exchanged either entirely or partially with another type of cation utilizing ion exchange techniques in a conventional manner. By means of such cation exchange, it has been possible to vary the properties of a given aluminosilicate by suitable selection of the cation.

Prior art techniques have resulted in the formation of a great variety of synthetic zeolites. The zeolites have come to be designated by letter or other convenient symbols, as illustrated by zeolite Z (U.S. Patent No. 2,882,243), zeolite X (U.S. Patent No. 2,882,244), zeolite Y (U.S. Patent No. 3,130,007), zeolite ZK-5 (U.S. Patent No. 3,247,195), zeolite Beta, (U.S. Patent No. 3,308,069), zeolite ZK-4 (U.S. Patent No. 3,314,752), zeolite ZSM-5 (U.S. Patent No. 3,702,886), zeolite ZSM-11 (U.S. Patent No. 3,709,979), zeolite ZSM-12 (U.S. Patent No. 3,832,449), zeolite ZSM-20 (U.S. Patent No. 3,972,983), ZSM-35 (U.S. Patent No. 4,016,245), ZSM-38 (U.S. Patent No. 4,046,859) and zeolite ZSM-23 (U.S. Patent No. 4,076,842).

The silica-to-alumina ratio of a zeolite is often variable; for example, zeolite Y can be synthesized with a silica-to-alumina ratio ranging from 3 to about 6. In some zeolites, for example ZSM-5, the upper limit of silica-to-alumina ratio is virtually unbounded. Thus U.S. Patent No. 3,941,871 discloses a crystalline zeolite essentially free of aluminum and exhibiting an X-ray diffraction pattern characteristic of ZSM-5. Similarly, U.S. Patent Nos. 4,061,724, 4,073,865 and 4,104,294 describe microporous crystalline silicates or organosilicates in which the aluminum content is at impurity levels.

To date, various methods have been proposed for modification of and substitution in the crystal framework of zeolites. For example, in accordance with U.S. Patent No. 4,503,023, aluminum from $AlO_4$-tetrahedra of zeolites is extracted and substituted with silicon to form zeolite compositions having higher $SiO_2/Al_2O_3$ molar ratios. The preparative procedure involves contact of the starting zeolite having an $SiO_2/Al_2O_3$ molar ratio of about 3 or greater with an aqueous solution of a fluorosilicate salt using controlled proportions and temperature and pH conditions which are intended to avoid aluminum extraction without silicon substitution. The fluorosilicate salt serves as the aluminum extractant and as the source of extraneous silicon which is inserted into the zeolite structure in place of the extracted aluminum.

U.S. Patent No. 4,427,790 describes a process for improving the activity of crystalline zeolites in which the zeolite in the "as synthesized" form or following ion-exchange is reacted with a compound having a complex fluoranion.

The use of chelating agents to remove framework and non-framework aluminum from faujasite materials is known from G. T. Kerr, "Chemistry of Crystalline Aluminosilicates. V. Preparation of Aluminum Deficient Faujasites", J. Phys. Chem. (1968) 72 (7) 2594; T. Gross et al., "Surface Composition of Dealuminized Y Zeolites Studied by X-Ray Photoelectron Spectroscopy", Zeolites (1984) 4, 25; and J. Dwyer et al., "The Surface Composition of Dealuminized Zeolites", J. Chem. Soc., Chem. Comm. (1981) 42.

Other references teaching removal of aluminum from zeolites include U.S. Patent No. 3,442,795, and U.K. Patent No. 1,058,188 (hydrolysis and removal of aluminum by chelation); U.K. Patent No. 1,061,847 (acid extraction of aluminum); U.S. Patent No. 3,493,519 (aluminum removal by steaming and chelation); U.S. Patent No. 3,591,488 (aluminum removal by steaming); U.S. Patent No. 4,273,753 (dealuminization by silicon halides and oxyhalides); U.S. Patent No. 3,691,099 (aluminum extraction with acid); U.S. Patent No. 4,093,560 (dealuminization by treatment with salts); U.S. Patent No. 3,937,791 (aluminum removal with Cr-

(III) solutions); U.S. Patent No. 3,506,400 (steaming followed by chelation); U.S. Patent No. 3,640,681 (extraction of aluminum with acetylacetonate followed by dehydroxylation); U.S. Patent No. 3,836,561 (removal of aluminum with acid); German Patent No. 2,510,740 (treatment of zeolite with chlorine or chlorine-containing gases at high temperatures); Netherlands Patent No. 7,604,264 (acid extraction), Japan Patent No. 53/101,003, (treatment with EDTA or other materials to remove aluminum) and J. Catalysis, 54, 295 (1978) (hydrothermal treatment followed by acid extraction).

The present invention seeks to provide a process for introducing boron into the framework of a crystalline silicate or crystalline aluminosilicate zeolite.

Accordingly, the invention resides in a process for incorporating boron into the framework of a crystalline aluminosilicate, comprising the step of contacting said crystalline silicate or aluminosilicate with a source of fluoride ion, in the presence of water and a source of boron under conditions or pH and temperature to retain the crystal structure of the silicate or aluminosilicate and incorporate boron therein.

The crystalline silicates or aluminosilicates which are modified in accordance with this invention are preferably members of a class of zeolitic materials which exhibit unusual properties. These zeolites may have unusually low alumina contents, i.e., high silica to alumina mole ratios and they can be very active even when the silica to alumina mole ratio exceeds 30. The activity is surprising since catalytic activity is generally attributed to framework aluminum atoms and/or cations associated with these aluminum atoms.

The silica to alumina mole ratio referred to may be determined by conventional analysis. This ratio is meant to represent, as closely as possible, the ration in the rigid anionic framework of the zeolite crystal and to exclude aluminum in the binder or in cationic or other form within the channels. Although zeolites with silica to alumina mole ratios of at least 12 are useful, it is preferred to use zeolites having substantially higher silica/alumina ratios, e.g., 70 and above.

The preferred class of zeolites, after activation, acquire an intracrystalline sorption capacity for normal hexane which is greater than that for water, i.e., they exhibit "hydrophobic" properties. This hydrophobic character can be used to advantage in some applications.

The preferred class of zeolites also exhibit a pore structure which is intermediate in size between that of a small pore Linde A and large pore zeolite X and Y and which therefore freely sorbs normal paraffins but provides only a constrained access to larger molecules. Rather than attempt to judge from crystal structure whether or not a zeolite possesses the constrained access to molecules or larger cross-section than that of normal paraffins, a simple determination of the "Constraint Index" (see original) and a method of its determination is described in, for example, U.S. Patent No. 4,016,218. In particular the zeolites of the class preferred for use in the process of the invention exhibit a Constraint Index in the range of 1 to 12 when tested at some temperature in the range 290-540°C. Examples of zeolites having a Constraint Index within this range include ZSM-5, ZSM-11, ZSM-12, ZSM-23, ZSM-35, ZSM-38, ZSM-48, and zeolite beta, with ZSM-5 being especially preferred.

ZSM-5 is described in greater detail in U.S. Patent No. 3,702,886 and U.S. Patent No. Re. 29,948. ZSM-11 is described in U.S. Patent NO. 3,709,979.

ZSM-12 is described in U.S. Patent No. 3,832,449.

ZSM-23 is described in U.S. Patent No. 4,076,842.

ZSM-35 is described in U.S. Patent No. 4,016,245.

ZSM-38 is described in U.S. Patent No. 4,046,859.

ZSM-48 is described in U.S. Patent No. 4,375,573.

Zeolite beta is described in U.S. Patent Nos. 3,308,069 and Re. 28,341.

In accordance with the process of the invention, crystalline silicates and crystalline aluminosilicate zeolites characterized by an $SiO_2:Al_2O_3$ ratio of at least about 3:1, are modified by contact with fluoride ion, in the presence of a source of boron atoms under hydrolytic conditions to incorporate that boron into the zeolitic framework. Incorporation of boron into the framework of the crystalline material can be established by spectral data, e.g., by B MAS NMR. Decreased aluminum content of the product can be measured directly by elemental analysis or by decrease in ammonium ion exchange capacity. Decreased aluminum content is accompanied by decrease in hexane cracking activity as measured by an alpha value determination. When alpha value is examined, it is noted that the alpha value is an approximate indication of the catalytic cracking activity of the catalyst compared to a standard catalyst. The determination of alpha value is described in U.S. Patent 3,354,078 and in The Journal of Catalysis, Vol. IV. pp. 522-529 (August 1965).

The hydrolytic conditions used in the process of the invention require the presence of water during contact of the zeolite with the fluoride ion and the boron source. In one embodiment of the invention, hydrolytic conditions are satisfied by using aqueous solutions of the fluoride ion source; these solutions may be dilute or concentrated solution of sources of fluoride ion and preferably have a pH in the range 3 to 10 since, outside this pH range depletion of framework elements could occur. The most preferred pH range is from 6 to 9. The pH of the treatment solution can be adjusted by addition of soluble hydroxides, preferably ammonium hydroxide. The hydrolytic conditions may require temperatures greater than ambient temperature, although generally the temperature will not exceed 100°C. Preferably, the temperature ranges from 50° to 95°C.

The source of boron atoms can be water soluble salts of a borate or a borate derivative. In one embodiment of the invention, the water soluble borate or borate derivative is the tetrafluoroborate ($BF_4^-$) anion. Although any soluble salt of that anion can be used, the ammonium form is preferred. Other soluble boron sources include $BH_4^-$, $BCl_4^-$, $B(OH)_4^-$, $BO_2^-$, $BO_3^{2-}$, $B_4O_7^{2-}$. The concentration of boron in such solutions can range from 0.01 M to 9.0 M.

The period of time of contact with the source of fluoride ion and the source of boron preferably ranges from 30 min. to 50 hours.

It is believed that the result of the process of the invention involves reaction of the boron fluoride reagent with aluminum and/or silicon in the crystalline framework to form soluble aluminum or silicon fluoride compounds with subsequent boron lattice insertion.

After fluoride treatment, the zeolites can be ammonium ion-exchanged in conventional manner and then calcined at a temperature up to about 600°C to convert the treated zeolite to its hydrogen form.

The boron aluminosilicate zeolites produced by the process of the present invention are useful as a catalyst component for a variety of organic, e.g. hydrocarbon, compound conversion processes.

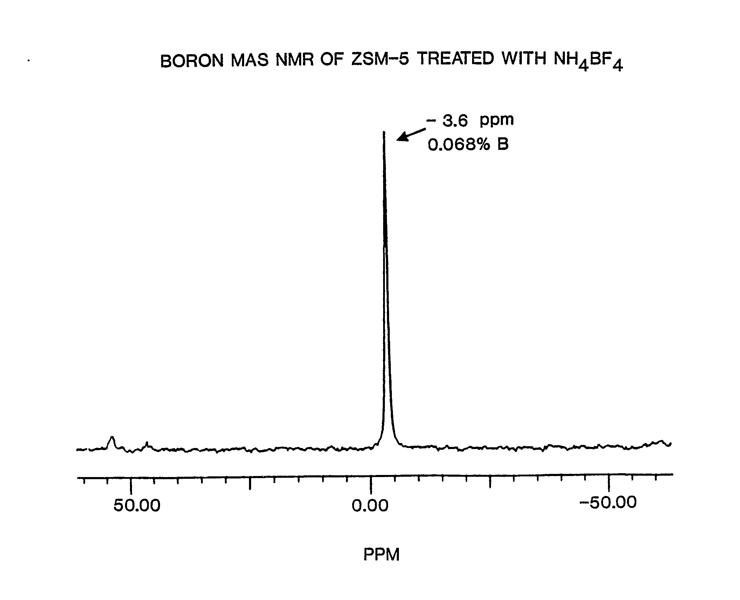

The invention will now be more particularly described with reference to the following Example and the accompanying drawing is a boron MAS NMR spectrum of a product produced in accordance with a method according to one example of the invention.


## EXAMPLE

In a plastic vessel, 1 g of $(NH_4)$ZSM-5 (100% extrudate) was slurried with 50 ml of a solution 0.2 M in $NH_4BF_4$ buffered to pH of 7.3 with ammonium acetate. This mixture was heated overnight at 85°C. The resultant product was filtered and washed with distilled water. The catalyst was then exchanged with $NH_4NO_3$ and washed. All wash and exchange solutions used were at pH of 8-9 by addition of $NH_4OH$.

The B MAS NMR analysis was run with the sample in $NH_4^+$ form. The spectrum was quantified using 2.5 pulses.

As can be seen from the drawing, the spectrum shows the expected peak for framework boron at -3.6 ppm. This chemical shift is characteristic of framework boron as observed in standard (B) ZSM-5. Quantification of this peak gives the boron content as 0.068%.

Analysis (duplicated) gave the following data:

| | %$SiO_2$ | %$Al_2O_3$ | %B |
|---|---|---|---|
| Parent Zeolite | 93.55 | 2.77 | |
| – | 93.23 | 2.77 | |
| Treated Zeolite | 92.70 | 2.31 | 0.073 |
| | 92.56 | 2.32 | 0.073 |

This data gave the boron content of 0.073% which matched well with the NMR data. The calculated $SiO_2/(Al_2O_3 + B_2O_3)$ ratio of the product was 58 which correlated with the starting catalyst $SiO_2/Al_2O_3$ ratio of 57. It was concluded then that the boron had preferentially substituted for the aluminum atoms in the framework.


**Claims**

1. A process for incorporating boron into the framework of a crystalline silicate or aluminosilicate, comprising the step of contacting said crystalline silicate or aluminosilicate with a source of fluoride ion, in the presence of water and a source of boron under conditions of pH and temperature to retain the crystal structure of the silicate or aluminosilicate and incorporate boron therein.

2. The process of claim 1, wherein said sources of fluoride ion and boron are provided by a source of fluoroborate anion.

3. The process of claim 2, wherein the source of fluoroborate anion is present as an aqueous solution having a concentration of 0.01 M to 9.0 M in said anion.

4. The process of any preceding claim wherein pH is 3 to 10.

5. The process of any preceding claim wherein said temperature is less than or equal to 100°C.

6. The process of claim 5, wherein said temperature is 50°C to 95°C.

7. A process according to any preceding claim wherein the crystalline silicate or aluminosilicate has a constraint index in the range of 1 to 12.

BORON MAS NMR OF ZSM-5 TREATED WITH $NH_4BF_4$

— 3.6 ppm
0.068% B

50.00                    0.00                   −50.00

PPM